(19)

Europäisches Patentamt
European Patent Office
Office européen des brevets

(11) **EP 4 212 982 B1**

(12) **EUROPEAN PATENT SPECIFICATION**

(45) Date of publication and mention
of the grant of the patent:
**09.07.2025 Bulletin 2025/28**

(21) Application number: **21913776.7**

(22) Date of filing: **07.12.2021**

(51) International Patent Classification (IPC):
***G05D 23/24*** *(2006.01)* ***G05D 23/19*** *(2006.01)*

(52) Cooperative Patent Classification (CPC):
**G05D 23/2401; A24F 40/50; G05D 23/1909;
H05B 1/0227**

(86) International application number:
**PCT/CN2021/136079**

(87) International publication number:
**WO 2022/143035 (07.07.2022 Gazette 2022/27)**

(54) **ATOMIZATION DEVICE, HEATING CIRCUIT, METHOD, AND READABLE STORAGE MEDIUM**

ZERSTÄUBUNGSVORRICHTUNG, HEIZSCHALTUNG, VERFAHREN UND LESBARES
SPEICHERMEDIUM

DISPOSITIF D'ATOMISATION, CIRCUIT DE CHAUFFAGE, PROCÉDÉ ET SUPPORT DE
STOCKAGE LISIBLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.12.2020 CN 202023298846 U**

(43) Date of publication of application:
**19.07.2023 Bulletin 2023/29**

(73) Proprietor: **Jiangmen Moore Technology., Ltd
Jiangmen, Guangdong 529040 (CN)**

(72) Inventors:
• **LI, Yafei
Jiangmen, Guangdong 529040 (CN)**

• **LI, Xiangzhong
Jiangmen, Guangdong 529040 (CN)**

(74) Representative: **Westphal, Mussgnug & Partner,
Patentanwälte mbB
Werinherstraße 79
81541 München (DE)**

(56) References cited:
**WO-A1-2019/239548      CN-A- 108 873 976
CN-A- 109 567 280      CN-A- 109 656 283
CN-A- 109 656 283      CN-A- 110 313 643
CN-A- 111 436 668      CN-U- 214 151 517
JP-B1- 6 667 709      US-A1- 2008 197 856
US-A1- 2020 237 010**

**Description**

TECHNICAL FIELD

The invention relates to the field of atomization equipment, in particular to an atomization device, a heating circuit, a method and a readable storage medium.

BACKGROUND

For an atomization device, the core element is a heating element, a core technology is to control the temperature of the heating element, and a key of temperature control is to measure the temperature of the heating element. Moreover, the heating element is usually a heating resistor, and the heating resistor is powered to generate heat, so that the atomized substrate is heated, and the atomized substrate is heated to generate aerial fog or aerosol. In a current heating circuit, a sampling resistor is usually connected to a heating loop circuit in series to detect the resistance value of a heating resistor, and then the voltage drop on the sampling resistor is amplified by an operational amplifier and then collected and calculated by a MCU (Microcontroller Unit), wherein the MCU obtains current through the formula $I = U_1/R_1$, Where $U_1$ is the voltage drop across the sampling resistor, $R_1$ is the resistance of the sampling resistor, and I is the current. Because the voltage of the MCU is usually obtained through the LDO (Low Dropout Regulator) after voltage reduction, the voltage that the MCU can collect is lower than the voltage of the heating power supply (battery), so the voltage on the heating resistor also needs to be divided by the sampling resistor and then collected by the MCU. The resistance of the heating resistor is then calculated by formula $R_2 = U_2/I$, where $U_2$ is the voltage drop across the heating resistor and $R_2$ is the resistance of the heating resistor. In this way, because the sampling resistor is connected in series with the heating loop circuit, the sampling resistance value must be very small (m$\Omega$ level) to avoid affecting the heating efficiency. Because the voltage drop on the sampling resistor is very small, an operational amplifier needs to be added to amplify the voltage drop of the sampling resistor. Because that sampling resistor is very small, the precision of the resistance value cannot be very high, in addition, the error of the operational amplifier is also caused, so that the error of the sampled current is relatively large, in addition, the precision error of the sampling resistor causes that the collect voltage on the heating resistor also has an error, therefore, the resistance error of the heating resistor calculated by formula $R_2 = U_2/I$ is relatively large, and the cost is relatively high due to the fact that an operational amplify needs to be added.

Publication CN 109 656 283 A is considered to be relevant to the present application.

SUMMARY OF THE DISCLOSURE

The technical problem to be solved by the invention is that the prior art has the defects of large error and high cost. The problem underlying the present application is solved by a heating circuit for an atomization device having the features of claim 1, an atomization device having the features of claim 5, a heating method for an atomization device having the features of claim 6 and a readable storage medium having the features of claim 7.

The invention adopts the technical scheme that a heating circuit of the atomization device comprises a heating resistor, an MCU and a sampling resistor, wherein the resistance value of the sampling resistor is greater than the resistance value of the heating resistor;

the MCU controls a battery power supply to only supply power to the heating resistor in a first time period of a PWM (Pulse Width Modulation) period, so that the heating resistor works normally;

the MCU controls the battery power supply to supply power to the sampling resistor and the heating resistor which are connected in series in a second time period of a PWM period, and respectively collects a voltage of the heating resistor and a voltage of the sampling resistor, and calculates the resistance value of the heating resistor according to the resistance value of the sampling resistor and the collected voltages.

The invention also comprises: a first driving unit, a second driving unit, and,

the MCU controls the first driving unit through a corresponding IO (Input/Output) port to enable the battery power supply to only supply power to the heating resistor in a first time period of a PWM period;
the MCU controls the second driving unit through a corresponding IO port to enable the battery power supply to supply power to the sampling resistor and the heating resistor which are connected in series in a second time period of the PWM period, and respectively collects the voltage of the heating resistor and the voltage of the sampling resistor through the corresponding IO port, and calculating the resistance value of the heating resistor according to the resistance value of the sampling resistor and the collected voltages.

According to the invention, the first driving unit comprises a PMOS (Positive Channel Metal Oxide Semiconductor,) transistor, a switching device, a third resistor and a fourth resistor. A first IO port of the MCU is respectively connected with a control end of the switching device and a first end of the fourth resistor, a first end of the switching device and a second end of the fourth resistor are respectively electrical grounding, and a second end of the switching device is respectively connected with a gate of the PMOS transistor and a first end of the third resistor; a source electrode of the PMOS transistor and a second end of the third resistor are respectively connected with a battery power supply, a drain electrode of the PMOS transistor is connected with a first end of the heating resistor, and a second end of the heating resistor is electrical grounding.

In an alternative embodiment, the second driving unit comprises a first transistor, a base electrode of the first transistor is connected with a second IO port of the MCU, a collector electrode of the first transistor is connected with a battery power supply, and an emitter electrode of the first transistor is respectively connected with a first end of the sampling resistor and a third IO port of the MCU; a second end of the sampling resistor is respectively connected with the first end of the heating resistor and a fourth IO port of the MCU.

In an alternative embodiment, the switching device comprises a NMOS (Negative Channel Metal Oxide Semiconductor) transistor, the gate of the NMOS transistor is connected to the first IO port of the MCU, and a source electrode of the NMOS transistor is electrical grounding, a drain electrode of the NMOS transistor is respectively connected with the gate of the PMOS transistor and a first end of the third resistor.

In an alternative embodiment, the switching device comprises a second transistor and a fifth resistor, wherein abase electrode of the second transistor is respectively connected with the first end of the fourth resistor and a first end of the fifth resistor, and a collector electrode of the second transistor is respectively connected with the gate of the PMOS transistor and the first end of the third resistor; an emitter electrode of the second transistor and the second end of the fourth resistor are electrical grounding respectively, and a second end of the fifth resistor is connected to the first IO port of the MCU.

The present invention also provides an atomization device including the heating circuit described above.

The present invention also provides a heating method of the atomization device, which is applied to an MCU and comprises the following steps:

> controlling a battery power supply to only supply power to a heating resistor in a first time period of a PWM period so that the heating resistor works normally;
> in a second time period of the PWM period, controlling the battery power supply to supply power to a sampling resistor and the heating resistor which are connected in series, and respectively collecting a voltage of the heating resistor and a voltage of the sampling resistor, wherein the resistance value of the sampling resistor is greater than the resistance value of the heating resistor;
> and calculating the resistance value of the heating resistor according to the resistance value of the sampling resistor and the collected voltages.

According to the invention, controlling the battery power supply to only supply power to the heating resistor comprises:
by control a first driving unit, the battery power supply only supplies power to the heating resistor.

According to the invention, controlling the battery power supply to supply power to the sampling resistor and the heating resistor which are connected in series comprises:
by controlling a second driving unit, the battery power supply supplies power to the sampling resistor and the heating resistor which are connected in series.

The present invention also provides a readable storage medium which stores a computer program, the computer program realizes the heating method described above when it is executed by the processor.

According to the technical scheme provided by the invention, in addition to a heating loop circuit, an additional detection loop circuit is added to a heating circuit of the atomization device, and an MCU realizes heating control by adopting a PWM driving mode, that is, the heating loop circuit and the detection loop circuit are controlled to work at different time periods, specifically, in a first time period of a PWM period, the MCU controls a battery power supply to only supply power to a heating resistor, in a second time period of the PWM period, the MCU controls the battery power supply to supply power to a sampling resistor and the heating resistor which are connected in series, that is, the MCU controls the detection loop circuit to work. In the heating circuit, because the sampling resistor only works when the resistance of the heating resistor is detected (in the second time period of the PWM period) and does not work at other times, the sampling resistor can select a resistor with a greater resistance, so that on one hand, because the accuracy of the sampling resistor with a greater resistance can be higher, the resistance detection accuracy of the heating resistor can be improved; on the other hand, because the voltage on the sampling resistor can be directly sampled through an MCU (with an ADC (Analog To Digital Converter) port), amplification by an operational amplifier is no longer needed, the accuracy of voltage sampling can be improved, and then the resistance detection accuracy of the heating resistor is improved. At the same time, since an operational amplifier is not required, the cost can be reduced.

BRIEF DESCRIPTION OF THE DRAWINGS

In order to more clearly illustrate the embodiments of the present invention, the following will briefly introduce the drawings used in the description of the embodiments. Wherein in the drawings:

Fig. 1 is a circuit diagram of a first embodiment of a heating circuit of an atomization device according to the present invention;
Fig. 2 is a circuit diagram of a second embodiment of the heating circuit of the atomization device of the present invention;
Fig. 3 is a flow chart of a first embodiment of a heating method of the atomization device of the present invention.

PREFERRED EMBODIMENTS

In the following, the technical solutions of the embodiments of the present invention will be clearly and completely described in conjunction with the accompanying drawings of the embodiments of the present invention.
Aiming at the technical problems of low detection precision of the resistance value of the heating resistor and high cost in the existing heating circuit, the invention provides a heating circuit of an atomization device, which includes an MCU, a heating resistor and a sampling resistor, and the resistance value of the sampling resistor is greater than that of heating resistor, for example, the sampling resistor is a high-precision resistor with a resistance value of $\Omega$ (that is, a resistance value of at least 1 $\Omega$). In addition, the MCU controls a battery power supply to only supply power to the heating resistor in a first time period of a PWM period, so that the heating resistor works normally; the MCU controls the battery power supply to supply power to the sampling resistor and the heating resistor which are connected in series in a second time period of the PWM period, and respectively collects the voltage of the heating resistor and the voltage of the sampling resistor in the second time period, and calculates the resistance value of the heating resistor according to the resistance value of the sampling resistor and the collected voltages. It should be understood that the PWM period is equal to the sum of the first time period and the second time period.
According to the invention, in addition to a heating loop circuit, a detection loop circuit is additionally arranged in the heating circuit, and the MCU adopts a PWM driving mode to realize heating control, that is, to control the heating loop circuit and the detection loop circuit to work in different time periods. Specifically, in a first time period of a PWM period, the MCU controls the battery power supply to only supply power to the heating resistor, that is, to control the heating loop circuit to work; in a second period of the PWM period, the MCU controls the battery power supply to supply power to the sampling resistor and the heating resistor which are connected in series, that is, the MCU controls the detection loop circuit to work. In the heating circuit of the invention, because the sampling resistor only works when the resistance of the heating resistor is detected (in the second time period of the PWM period) and does not work at other times, the sampling resistor can be a resistor with a greater resistance, so that, on one hand, the accuracy of the sampling resistor with a greater resistance can be higher, therefore, the resistance value detection accuracy of the heating resistor can be improved; on the other hand, because the voltage on the sampling resistor can be directly sampled by the MCU (with an ADC port) and does not need to be amplified by an operational amplifier, the accuracy of voltage sampling can be improved, and then the resistance value detection accuracy of the heating resistor is higher; and meanwhile, because the operational amplifier is not needed, the cost can be reduced.
Further, according to the invention, the heating circuit of the present invention further comprises a first driving unit and a second driving unit, and the MCU controls the first driving unit through a corresponding IO port to enable the battery power supply to only supply power to the heating resistor in the first time period of the PWM period; the MCU controls the second driving unit through a corresponding IO port to enable the battery power supply to supply power to the sampling resistor and the heating resistor which are connected in series in a second time period of the PWM period, and respectively collects the voltage of the heating resistor and the voltage of the sampling resistor through one or more corresponding IO ports, and calculating the resistance value of the heating resistor according to the resistance value of the sampling resistor and the collected voltages.

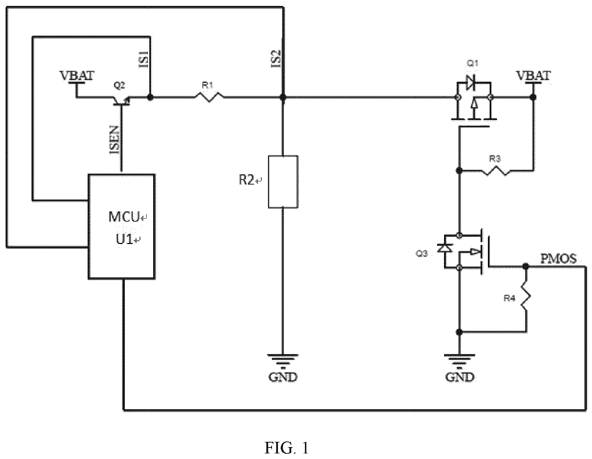

Fig. 1 is a circuit diagram of a heating circuit of an atomization device according to a first embodiment of the present invention, in which the heating circuit of the embodiment comprises an MCU U1 (That is, microcontroller U1), a heating resistor R2, a sampling resistor R1, a first driving unit and a second driving unit, and the resistance value of the sampling resistor R1 is greater than the resistance value of the heating resistor R2.
The first driving unit comprises a PMOS transistor Q1, an NMOS transistor Q3, a third resistor R3 and a fourth resistor R4, wherein a first IO port (PMOS) of the MCU U1 is respectively connected with the gate of the NMOS transistor Q3 and a first end of the fourth resistor R4, and a source electrode of the NMOS transistor Q3 and a second end of the fourth resistor R4 are respectively electrical grounding. A drain electrode of the NMOS transistor Q3 is respectively connected with a gate of the PMOS transistor Q1 and a first end of the third resistor R3, a source electrode of the PMOS transistor Q1 and a second end of the third resistor R3 are respectively connected with a battery power supply (BAT), a drain electrode of the PMOS transistor Q1 is connected with a first end of a heating resistor R2, and a second end of a heating resistor R2 is electrical grounding.

The second driving unit comprises a first transistor Q2, and, a base electrode of the first transistor Q2 is connected with a second IO port (ISEN) of the MCU U1, a collector electrode of the first transistor Q2 is connected with the battery power supply (BAT), and an emitter electrode of the second transistor Q2 is respectively connected with a first end of the sampling resistor R1 and a third IO port (IS1) of the MCU U1; a second end of the sampling resistor R1 is respectively connected to the first end of the heating resistor R2 and a fourth IO port (IS2) of the MCU U1. It should be understood that the third IO port (IS1) and the fourth IO port IS2 of the MCU U1 are AD ports.

The working principle of the heating circuit is described as follows:

in the first time period of each PWM period, the first IO port (PMOS) of MCU U1 outputs a high level, and the NMOS transistor Q3 is turned on, so that the PMOS transistor Q1 is turned on. Meanwhile, the second IO port (ISEN) of MCU U1 outputs low level, and the first transistor Q2 is turned off. At this time, the voltage of the battery power supply (VBAT) is directly loaded on the heating resistor R2 through the PMOS transistor Q1, and the heating resistor R2 starts to work normally;

in the second time period of each PWM period, the first IO port (PMOS) of the MCU U1 outputs a low level, and the NMOS transistor Q3 is turned off, so that the PMOS transistor Q1 is turned off, and the heating resistor R2 stops heating. Meanwhile, the second IO port (ISEN) of MCU U1 outputs a high level, and the first transistor Q2 is turned on. At this time, the current flows from the battery power source (VBAT) to the ground through the first transistor Q2, the sampling resistor R1, and the heating resistor R2. Moreover, the base voltage of the first transistor Q2 is the high level of the IO port of the MCU U1, and due to the clamping effect of the base voltage of the first transistor Q2, the emitter voltage the first transistor Q2 thereof is slightly lower than the base voltage the first transistor Q2 thereof when the first transistor Q2 conducting. At this time, the voltages of the third and fourth IO ports (IS1, IS2) of the MCU U1 are both lower than the high level of the IO port of the MCU U1, so the third and fourth IO ports (IS1, IS2) of the MCU U1 can directly sample the voltage, assuming that the voltage sampled by the third IO port of the MCU U1 is VIS1. The voltage sampled by the fourth IO port of the MCU U1 is VIS2, and then the current I of the detection loop circuit is calculated according to the following formula: $I = (VIS1-VIS2)/R_1$, where $R_1$ is the resistance value of the sampling resistor R1. The resistance value $R_2$ of the heating resistor R2 is calculated according to the following formula:

$$R_2 = VIS2/I = R_1 * VIS2/ (VIS1-VIS2).$$

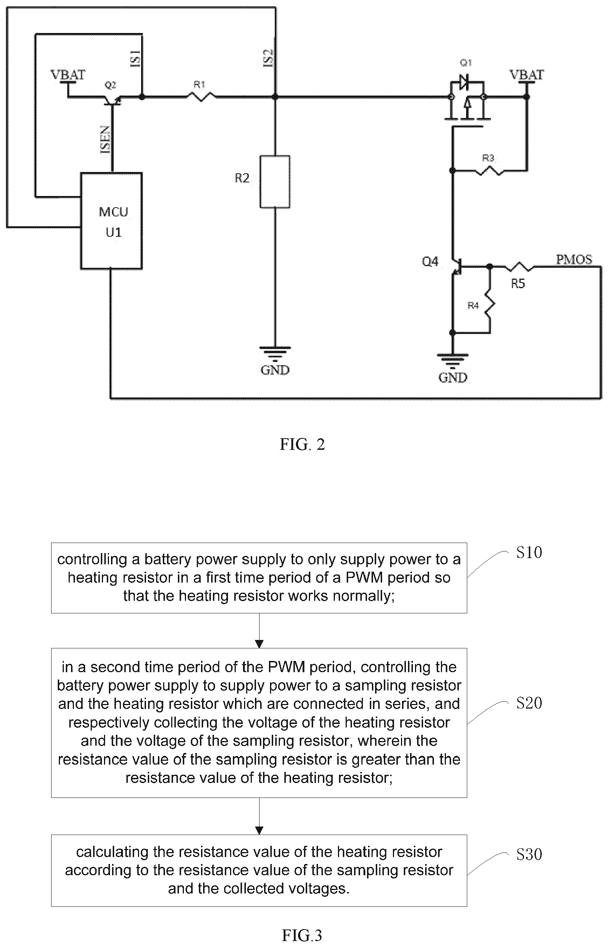

Fig. 2 is a circuit diagram of a second embodiment of the heating circuit of the atomization device of the present invention. Compared with the embodiment shown in fig. 1, the only difference of the heating circuit of this embodiment is that the switching device is replaced by a second transistor Q4 and a fifth resistor R5 instead of the NMOS transistor Q3. And a base electrode of the second transistor Q4 is respectively connected with the first end of the fourth resistor R4 and a first end of the fifth resistor R5, a collector electrode of the second transistor Q4 is respectively connected with the gate of PMOS transistor Q1 and the first end of the third resistor R3, and a emitter electrode the second transistor Q4 and the second end of fourth resistor R4 are respectively electrical grounding, a second end of the fifth resistor R5 is connected to the first IO port (PMOS) of the MCU U1. Other similar parts will not be described here.

The working principle of the heating circuit is described as follows:

in the first time period of each PWM period, the first IO port (PMOS) of the MCU U1 outputs a high level, and the second transistor Q4 is turned on, so that the PMOS transistor Q1 is turned on. Meanwhile, the second IO port (ISEN) of MCU U1 outputs low level, and the first transistor Q2 is turned off. At this time, the voltage of the battery power supply (VBAT) is directly loaded on the heating resistor R2 through the PMOS transistor Q1, and the heating resistor R2 starts to work normally;

in the second time period of each PWM period, the first IO port (PMOS) of the MCU U1 outputs a low level, and the second transistor Q4 is turned off, so that the PMOS transistor Q1 is turned off, and the heating resistor R2 stops heating. Meanwhile, the second IO port (ISEN) of MCU U1 outputs a high level, and the first transistor Q2 is turned on. At this time, the current flows from the battery power source (VBAT) to the ground through the first transistor Q2, the sampling resistor R1, and the heating resistor R2. Moreover, the base voltage of the first transistor Q2 is the high level of the IO port of the MCU U1, and due to the clamping effect of the base voltage of the first transistor Q2, the emitter voltage of the first transistor Q2 is slightly lower than the base voltage of the first transistor Q2 when the first transistor Q2 is conducting. At this time, the voltages of the third and fourth IO ports (IS1, IS2) of the MCU U1 are both lower than the high level of the IO port of the MCU U1, so the third and fourth IO ports (IS1, IS2) of the MCU U2 can directly sample the voltage, assuming that the voltage sampled by the third IO port of the MCU U2 is VIS1, the voltage sampled by the fourth IO port of the MCU U1 is VIS2, and then the current I of the detection loop circuit is calculated according to the following formula: I = (VIS1-VIS2)/$R_1$, where $R_1$ is the resistance value of the sampling resistor R1. The resistance value $R_2$ of the heating resistor R2 is calculated according to the following formula:

$$R_2 = VIS2/I = R_1 * VIS2/ (VIS1-VIS2).$$

The present invention also provides an atomization device including a heating circuit, and the structure of the heating circuit can be described with reference to the foregoing.

Fig. 3 is a flow chart of embodiment 1 of a heating method of an atomization device according to the present invention. The heating method of this embodiment is applied to an MCU, and specifically comprises the following steps:

Step S10. controlling a battery power supply to only supply power to a heating resistor in a first time period of a PWM period so that the heating resistor works normally;

Step S20. in a second time period of the PWM period, controlling the battery power supply to supply power to a sampling resistor and the heating resistor which are connected in series, and respectively collecting the voltage of the heating resistor and the voltage of the sampling resistor, wherein the resistance value of the sampling resistor is greater than that of the heating resistor;

Step S30. calculating the resistance value of the heating resistor according to the resistance value of the sampling resistor and the collected voltages.

In this embodiment, in a PWM period, the heating control and resistance detection are performed on the heating resistor in different time periods, specifically, in a first time period of the PWM period, the MCU controls the battery power supply to only supply power to the heating resistor, that is, controls the heating resistor to work normally; in a second time period of the PWM period, the MCU controls the battery power supply to supply power to the sampling resistor and the heating resistor connected in series, that is, to detect the resistance value of the heating resistor. Because the sampling resistor only works when the resistance value of the heating resistor is detected (in the second time period of the PWM period), and does not work at other times, the sampling resistor can select a resistor with a greater resistance value, so that on one hand, because the accuracy of the sampling resistor with a greater resistance value can be higher, the resistance value detection accuracy of the heating resistor can be improved; on the other hand, because the voltage on the sampling resistor can be directly sampled by the MCU (with an ADC port) and does not need to be amplified by an operational amplifier, the accuracy of voltage sampling can be improved, and then the resistance value detection accuracy of the heating resistor is higher; and meanwhile, because the operational amplifier is not needed, the cost can be reduced.

Further, the MCU may control the first driving unit to enable the battery power supply to only supply power to the heating resistor. Accordingly, the MCU can control the second driving unit to enable the battery power supply to supply power to the sampling resistor and the heating resistor which are connected in series.

The present invention also provides a readable storage medium which stores a computer program, the computer program realizes the heating method described above when it is executed by the processor.

**Claims**

1. A heating circuit of an atomization device, comprising a heating resistor (R2) and an MCU (U1), wherein the heating circuit further comprises a sampling resistor (R1), a first driving unit and a second driving unit, and the resistance value ($R_1$) of the sampling resistor (R1) is greater than the resistance value ($R_2$) of the heating resistor (R2), wherein

the MCU (U1) is configured to control the first driving unit through a corresponding IO port to enable a battery power supply to only supply power to the heating resistor (R2) in a first time period of a PWM period so as to enable the heating resistor (R2) to work;

the MCU (U1) is configured to control the second driving unit through a corresponding IO port to enable the battery power supply to supply power to the sampling resistor (R1) and the heating resistor (R2) which are connected in series in a second time period of the PWM period, and respectively to collect the voltage of the heating resistor (R2) and the voltage of the sampling resistor (R1) through one or more corresponding IO ports, and to calculate the resistance value ($R_2$) of the heating resistor (R2) according to the resistance value ($R_1$) of the sampling resistor (R1) and the collected voltages; wherein the heating circuit is **characterized in that**

the first driving unit comprises a PMOS transistor (Q1), a switching device (Q3, Q4), a third resistor (R3) and a fourth resistor (R4), wherein a first IO port of the MCU (U1) is respectively connected with a control end of the switching device (Q3, Q4) and a first end of the fourth resistor (R4); a first end of the switching device (Q3, Q4) and a second end of the fourth resistor (R4) are respectively electrical grounding, a second end of the switching device (Q3, Q4) is respectively connected with a gate of the PMOS transistor (Q1) and a first end of a third resistor (R3), a source electrode of the PMOS transistor (Q1) and a second end of the third resistor (R3) are respectively connected with a battery power supply, and a drain electrode of the PMOS transistor (Q1) is connected with a first end of the heating resistor (R2); a second end of the heating resistor (R2) is electrical grounding.

2. The heating circuit of the atomization device according to claim 1, wherein the second driving unit comprises a first transistor (Q2), a base electrode of the first transistor(Q2) is connected with a second IO port of the MCU (U1), and a collector electrode of the first transistor (Q2) is connected with a battery power supply; an emitter of the first transistor (Q2) is respectively connected with a first end of the sampling resistor (R1) and a third IO port of the MCU (U1), and a second end of the sampling resistor (R1) is respectively connected with the first end of a heating resistor (R2) and a fourth IO port of the MCU (U1).

3. The heating circuit of the atomization device according to claim 1, wherein the switching device comprises an NMOS transistor (Q3), a gate of the NMOS transistor (Q3) is connected to the first IO port of the MCU, a source electrode of the NMOS transistor (Q3) is electrical grounding, and a drain electrode of the NMOS transistor (Q3) is connected to the gate of the PMOS transistor (Q1) and the first end of the third resistor (R3) respectively.

4. The heating circuit of the atomization device according to claim 1, wherein the switching device comprises a second transistor (Q4) and a fifth resistor (R5), wherein a base of the second transistor(Q4) is respectively connected with the first end of the fourth resistor (R4) and a first end of the fifth resistor (R5); a collector electrode of the second transistor(Q4) is respectively connected with the gate of the PMOS transistor and the first end of the third resistor (R3), an emitter electrode of the second transistor(Q4) and the second end of the fourth resistor (R4) are respectively electrical grounding, and a second end of a fifth resistor (R5) is connected with the first IO port of the MCU (U1).

5. An atomization device comprising the heating circuit according to any one from claim 1 to 4.

6. A heating method for an atomization device, applied to an MCU, comprising:

controlling a first driving unit through a corresponding IO port to enable a battery power supply to only supply power to a heating resistor (R2) in a first time period of a PWM period so that the heating resistor (R2) works normally;
in a second time period of the PWM period, controlling a second driving unit through a corresponding IO port to enable the battery power supply to supply power to a sampling resistor (R1) and the heating resistor (R2) which are connected in series, and respectively collecting the voltage of the heating resistor (R2) and the voltage of the sampling resistor (R1) through one or more corresponding IO ports, wherein the resistance value ($R_1$) of the sampling resistor (R1) is greater than the resistance value ($R_2$) of the heating resistor (R2);
and calculating the resistance value ($R_2$) of the heating resistor (R2) according to the resistance value ($R_1$) of the sampling resistor (R1) and the collected voltages,
wherein the heating method is **characterized in that** the first driving unit comprises a PMOS transistor (Q1), a switching device (Q3, Q4), a third resistor (R3) and a fourth resistor (R4), wherein a first IO port of the MCU (U1) is respectively connected with a control end of the switching device (Q3, Q4) and a first end of the fourth resistor (R4); a first end of the switching device (Q3, Q4) and a second end of the fourth resistor (R4) are respectively electrical grounding, a second end of the switching device (Q3, Q4) is respectively connected with a gate of the PMOS transistor (Q1) and a first end of a third resistor (R3), a source electrode of the PMOS transistor (Q1) and a second end of the third resistor (R3) are respectively connected with a battery power supply, and a drain electrode of the PMOS transistor (Q1) is connected with a first end of the heating resistor (R2); a second end of the heating resistor (R2) is electrical grounding.

7. A readable storage medium storing a computer program, wherein the computer program, when executed by a processor, realizes the heating method according to claim 6.

**Patentansprüche**

1. Heizkreis einer Zerstäubungsvorrichtung, umfassend einen Heizwiderstand (R2) und eine MCU (U1), wobei der Heizkreis ferner einen Abtastwiderstand (R1), eine erste Treibereinheit und eine zweite Treibereinheit umfasst, und der Widerstandswert ($R_1$) des Abtastwiderstands (R1) größer ist als der Widerstandswert ($R_2$) des Heizwiderstands

(R2), wobei

die MCU (U1) konfiguriert ist, um die erste Treibereinheit über einen entsprechenden E/A-Port zu steuern, um eine Batteriestromversorgung zu ermöglichen, nur in einer ersten Zeitperiode einer PWM-Periode Leistung an den Heizwiderstand (R2) zu liefern, um so dem Heizwiderstand (R2) zu ermöglichen, zu arbeiten;

die MCU (U1) konfiguriert ist, um die zweite Treibereinheit über einen entsprechenden E/A-Port zu steuern, um der Batteriestromversorgung zu ermöglichen, in einer zweiten Zeitperiode der PWM-Periode Leistung an den Abtastwiderstand (R1) und den Heizwiderstand (R2) zu liefern, die in Reihe geschaltet sind, und jeweils die Spannung des Heizwiderstands (R2) und die Spannung des Abtastwiderstands (R1) über einen oder mehrere entsprechende E/A-Ports zu sammeln und den Widerstandswert ($R_2$) des Heizwiderstands (R2) gemäß dem Widerstandswert ($R_1$) des Abtastwiderstands (R1) und den gesammelten Spannungen zu berechnen; wobei der Heizkreis **dadurch gekennzeichnet ist, dass** die erste Treibereinheit einen PMOS-Transistor (Q1), eine Schaltvorrichtung (Q3, Q4), einen dritten Widerstand (R3) und einen vierten Widerstand (R4) umfasst, wobei ein erster E/A-Port der MCU (U1) jeweils mit einem Steuerende der Schaltvorrichtung (Q3, Q4) und einem ersten Ende des vierten Widerstands (R4) verbunden ist; ein erstes Ende der Schaltvorrichtung (Q3, Q4) und ein zweites Ende des vierten Widerstands (R4) jeweils elektrisch geerdet sind, ein zweites Ende der Schaltvorrichtung (Q3, Q4) jeweils mit einem Gate des PMOS-Transistors (Q1) und einem ersten Ende eines dritten Widerstands (R3) verbunden ist, eine Source-Elektrode des PMOS-Transistors (Q1) und ein zweites Ende des dritten Widerstands (R3) jeweils mit einer Batteriestromversorgung verbunden sind, und eine Drain-Elektrode des PMOS-Transistors (Q1) mit einem ersten Ende des Heizwiderstands (R2) verbunden ist; ein zweites Ende des Heizwiderstands (R2) elektrisch geerdet ist.

2. Heizkreis der Zerstäubungsvorrichtung nach Anspruch 1, wobei die zweite Treibereinheit einen ersten Transistor (Q2) umfasst, eine Basiselektrode des ersten Transistors (Q2) mit einem zweiten E/A-Port der MCU (U1) verbunden ist, und eine Kollektorelektrode des ersten Transistors (Q2) mit einer Batteriestromversorgung verbunden ist; ein Emitter des ersten Transistors (Q2) jeweils mit einem ersten Ende des Abtastwiderstands (R1) und einem dritten E/A-Port der MCU (U1) verbunden ist, und ein zweites Ende des Abtastwiderstands (R1) jeweils mit dem ersten Ende eines Heizwiderstands (R2) und einem vierten E/A-Port der MCU (U1) verbunden ist.

3. Heizkreis der Zerstäubungsvorrichtung nach Anspruch 1, wobei die Schaltvorrichtung einen NMOS-Transistor (Q3) umfasst, ein Gate des NMOS-Transistors (Q3) mit dem ersten E/A-Port der MCU verbunden ist, eine Source-Elektrode des NMOS-Transistors (Q3) elektrisch geerdet ist und eine Drain-Elektrode des NMOS-Transistors (Q3) jeweils mit dem Gate des PMOS-Transistors (Q1) und dem ersten Ende des dritten Widerstands (R3) verbunden ist.

4. Heizkreis der Zerstäubungsvorrichtung nach Anspruch 1, wobei die Schaltvorrichtung einen zweiten Transistor (Q4) und einen fünften Widerstand (R5) umfasst, wobei eine Basis des zweiten Transistors (Q4) jeweils mit dem ersten Ende des vierten Widerstands (R4) und einem ersten Ende des fünften Widerstands (R5) verbunden ist; eine Kollektorelektrode des zweiten Transistors (Q4) jeweils mit dem Gate des PMOS-Transistors und dem ersten Ende des dritten Widerstands (R3) verbunden ist, eine Emitterelektrode des zweiten Transistors (Q4) und das zweite Ende des vierten Widerstands (R4) jeweils elektrisch geerdet sind, und ein zweites Ende eines fünften Widerstands (R5) mit dem ersten E/A-Port der MCU (U1) verbunden ist.

5. Zerstäubungsvorrichtung, umfassend den Heizkreis nach einem der Ansprüche 1 bis **4**.

6. Heizverfahren für eine Zerstäubungsvorrichtung, angewendet auf eine MCU, umfassend:

Steuern einer ersten Treibereinheit über einen entsprechenden E/A-Port, um einer Batteriestromversorgung zu ermöglichen, nur in einer ersten Zeitperiode einer PWM-Periode Leistung an einen Heizwiderstand (R2) zu liefern, so dass der Heizwiderstand (R2) normal arbeitet;

in einer zweiten Zeitperiode der PWM-Periode, Steuern einer zweiten Treibereinheit über einen entsprechenden E/A-Port, um der Batteriestromversorgung zu ermöglichen, Leistung an einen Abtastwiderstand (R1) und den Heizwiderstand (R2) zu liefern, die in Reihe geschaltet sind, und jeweils die Spannung des Heizwiderstands (R2) und die Spannung des Abtastwiderstands (R1) über einen oder mehrere entsprechende E/A-Ports zu sammeln, wobei der Widerstandswert ($R_1$) des Abtastwiderstands (R1) größer ist als der Widerstandswert ($R_2$) des Heizwiderstands (R2);

und Berechnen des Widerstandswerts ($R_2$) des Heizwiderstands (R2) gemäß dem Widerstandswert ($R_1$) des Abtastwiderstands (R1) und den gesammelten Spannungen, wobei das Heizverfahren **dadurch gekennzeichnet ist, dass** die erste Treibereinheit einen PMOS-Transistor (Q1), eine Schaltvorrichtung (Q3, Q4), einen dritten Widerstand (R3) und einen vierten Widerstand (R4) umfasst, wobei ein erster E/A-Port der MCU (U1) jeweils mit einem Steuerende der Schaltvorrichtung (Q3, Q4) und einem ersten Ende des vierten Widerstands (R4) verbunden ist; ein erstes Ende der Schaltvorrichtung (Q3, Q4) und ein zweites Ende des vierten Widerstands (R4) jeweils elektrisch geerdet sind, ein zweites Ende der Schaltvorrichtung (Q3, Q4) jeweils mit einem Gate des PMOS-Transistors (Q1) und einem ersten Ende eines dritten Widerstands (R3) verbunden ist, eine Source-Elektrode des PMOS-Transistors (Q1) und ein zweites Ende des dritten Widerstands (R3) jeweils mit einer Batteriestromversorgung verbunden sind, und eine Drain-Elektrode des PMOS-Transistors (Q1) mit einem ersten Ende des Heizwiderstands (R2) verbunden ist; ein zweites Ende des Heizwiderstands (R2) elektrisch geerdet ist.

7. Lesbares Speichermedium, das ein Computerprogramm speichert, wobei das Computerprogramm, wenn es von einem Prozessor ausgeführt wird, das Heizverfahren nach Anspruch 6 realisiert.

**Revendications**

1. Circuit de chauffage d'un dispositif **d'atomisation,** comprenant une résistance de chauffage (R2) et un microcontrôleur (U1), dans lequel le circuit de chauffage comprend également une résistance d'échantillonnage (R1), une première unité d'entraînement et une seconde unité d'entraînement, et la valeur de résistance $(R_1)$ de la résistance d'échantillonnage (R1) est supérieure à la valeur de résistance $(R_2)$ de la résistance de chauffage (R2), dans lequel

   le microcontrôleur (U1) est configuré pour commander la première unité d'entraînement à travers un port d'E/S correspondant pour permettre à une alimentation électrique par batterie de fournir uniquement de la puissance à la résistance de chauffage (R2) dans une première période de temps d'une période PWM afin de permettre à la résistance de chauffage (R2) de fonctionner ;
   le microcontrôleur (U1) est configuré pour commander la seconde unité d'entraînement à travers un port d'E/S correspondant pour permettre à l'alimentation électrique par batterie de fournir de la puissance à la résistance d'échantillonnage (R1) et la résistance de chauffage (R2) qui sont connectées en série pendant une seconde période de temps de la période PWM, et collecter respectivement la tension de la résistance de chauffage (R2) et la tension de la résistance d'échantillonnage (R1) via un ou plusieurs ports d'E/S correspondants, et calculer la valeur de résistance $(R_2)$ de la résistance de chauffage (R2) en fonction de la valeur de résistance $(R_1)$ de la résistance d'échantillonnage (R1) et des tensions collectées ; dans lequel le circuit de chauffage est **caractérisé en ce que** la première unité d'entraînement comprend un transistor PMOS (Q1), un dispositif de commutation (Q3, Q4), une troisième résistance (R3) et une quatrième résistance (R4), dans lequel un premier port d'E/S du microcontrôleur (U1) est respectivement connecté à une extrémité de commande du dispositif de commutation (Q3, Q4) et à une première extrémité de la quatrième résistance (R4) ; une première extrémité du dispositif de commutation (Q3, Q4) et une seconde extrémité de la quatrième résistance (R4) sont respectivement mises à la terre électrique, une seconde extrémité du dispositif de commutation (Q3, Q4) est respectivement connectée à une grille du transistor PMOS (Q1) et à une première extrémité d'une troisième résistance (R3), une électrode de source du transistor PMOS (Q1) et une seconde extrémité de la troisième résistance (R3) sont respectivement connectées à une alimentation électrique par batterie, et une électrode de drain du transistor PMOS (Q1) est connectée à une première extrémité de la résistance de chauffage (R2) ; une seconde extrémité de la résistance de chauffage (R2) est mise à la terre électrique.

2. Circuit de chauffage du dispositif d'atomisation selon la revendication 1, dans lequel la seconde unité d'entraînement comprend un premier transistor (Q2), une électrode de base du premier transistor (Q2) est connectée à un deuxième port d'E/S du microcontrôleur (U1), et une électrode de collecteur du premier transistor (Q2) est connectée à une alimentation électrique par batterie ; un émetteur du premier transistor (Q2) est respectivement connecté à une première extrémité de la résistance d'échantillonnage (R1) et à un troisième port d'E/S du microcontrôleur (U1), et une seconde extrémité de la résistance d'échantillonnage (R1) est respectivement connectée à la première extrémité d'une résistance de chauffage (R2) et à un quatrième port d'E/S du microcontrôleur (U1).

3. Circuit de chauffage du dispositif d'atomisation selon la revendication 1, dans lequel le dispositif de commutation comprend un transistor NMOS (Q3), une grille du transistor NMOS (Q3) est connectée au premier port d'E/S du microcontrôleur, une électrode de source du transistor NMOS (Q3) est mise à la terre électrique, et une électrode de drain du transistor NMOS (Q3) est connectée à la grille du transistor PMOS (Q1) et à la première extrémité de la troisième résistance (R3) respectivement.

**4.** Circuit de chauffage du dispositif d'atomisation selon la revendication 1, dans lequel le dispositif de commutation comprend un second transistor (Q4) et une cinquième résistance (R5), dans lequel une base du second transistor (Q4) est connectée respectivement à la première extrémité de la quatrième résistance (R4) et à une première extrémité de la cinquième résistance (R5) ; une électrode de collecteur du second transistor (Q4) est connectée respectivement à la grille du transistor PMOS et à la première extrémité de la troisième résistance (R3), une électrode d'émetteur du second transistor (Q4) et la seconde extrémité de la quatrième résistance (R4) sont respectivement mises à la terre électrique, et une seconde extrémité d'une cinquième résistance (R5) est connectée au premier port d'E/S du microcontrôleur (U1).

**5.** Dispositif d'atomisation comprenant le circuit de chauffage selon l'une quelconque des revendications 1 à 4.

**6.** Procédé de chauffage pour un dispositif d'atomisation, appliqué à un microcontrôleur, comprenant :

la commande d'une première unité d'entraînement à travers un port d'E/S correspondant pour permettre à une alimentation électrique par batterie de fournir uniquement de la puissance à une résistance de chauffage (R2) dans une première période de temps d'une période PWM de sorte que la résistance de chauffage (R2) fonctionne normalement ;

dans une seconde période de temps de la période PWM, la commande d'une seconde unité d'entraînement à travers un port d'E/S correspondant pour permettre à l'alimentation électrique par batterie de fournir de la puissance à une résistance d'échantillonnage (R1) et la résistance de chauffage (R2) qui sont connectées en série, et collecter respectivement la tension de la résistance de chauffage (R2) et la tension de la résistance d'échantillonnage (R1) à travers un ou plusieurs ports d'E/S correspondants, dans lequel la valeur de résistance $(R_1)$ de la résistance d'échantillonnage (R1) étant supérieure à la valeur de résistance $(R_2)$ de la résistance de chauffage (R2) ;

et le calcul de la valeur de résistance $(R_2)$ de la résistance de chauffage (R2) en fonction de la valeur de résistance $(R_1)$ de la résistance d'échantillonnage (R1) et des tensions collectées, dans lequel le procédé de chauffage est **caractérisé en ce que** la première unité d'entraînement comprend un transistor PMOS (Q1), un dispositif de commutation (Q3, Q4), une troisième résistance (R3) et une quatrième résistance (R4), dans lequel un premier port d'E/S du microcontrôleur (U1) est respectivement connecté à une extrémité de commande du dispositif de commutation (Q3, Q4) et à une première extrémité de la quatrième résistance (R4) ; une première extrémité du dispositif de commutation (Q3, Q4) et une seconde extrémité de la quatrième résistance (R4) sont respectivement mises à la terre électrique, une seconde extrémité du dispositif de commutation (Q3, Q4) est respectivement connectée à une grille du transistor PMOS (Q1) et à une première extrémité d'une troisième résistance (R3), une électrode de source du transistor PMOS (Q1) et une seconde extrémité de la troisième résistance (R3) sont respectivement connectées à une alimentation électrique par batterie, et une électrode de drain du transistor PMOS (Q1) est connectée à une première extrémité de la résistance de chauffage (R2) ; une seconde extrémité de la résistance de chauffage (R2) est mise à la terre électrique.

**7.** Support de stockage lisible stockant un programme informatique, dans lequel le programme informatique, lorsqu'il est exécuté par un processeur, réalise le procédé de chauffage selon la revendication 6.

FIG. 1

FIG. 2

| controlling a battery power supply to only supply power to a heating resistor in a first time period of a PWM period so that the heating resistor works normally; | S10 |

| in a second time period of the PWM period, controlling the battery power supply to supply power to a sampling resistor and the heating resistor which are connected in series, and respectively collecting the voltage of the heating resistor and the voltage of the sampling resistor, wherein the resistance value of the sampling resistor is greater than the resistance value of the heating resistor; | S20 |

| calculating the resistance value of the heating resistor according to the resistance value of the sampling resistor and the collected voltages. | S30 |

FIG.3

**EP 4 212 982 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 109656283 A